# EUROPEAN PATENT APPLICATION

(11) **EP 4 593 227 A1**
(43) Date of publication of application: **30.07.2025**
(21) Application number: 24154156.4
(22) Date of filing: 26.01.2024
(51) Int. Cl.: H02J 3/01, H02J 3/18, H02J 15/00, C25B 1/04, C25B 15/02

(54) **METHOD OF PROVIDING A POWER FACTOR CORRECTION, A COMPUTER PROGRAM, A COMPUTER-READABLE STORAGE MEDIUM, A CONTROLLER AND AN ELECTROLYSIS SYSTEM**

(71) Applicant: Siemens Energy Global GmbH & Co. KG, 81739 München (DE)
(72) Inventor: Loku, Fisnik, 90768 Fürth (DE); Schumann, Sven, 91452 Wilhermsdorf (DE); Atmadji, Ali, 91058 Erlangen (DE)

(57) **Abstract**

The invention relates to a method of providing a power factor correction, particularly a reactive power reduction, for an electrical power converter (1) by means of an electrolyzer (2), wherein the electrolyzer (2) receives an electrical power from an electrical power source (3) via the electrical power converter (1) and provides a conversion of the electrical power into an energy carrier, wherein an operating point of the conversion of the electrolyzer (2) is adjusted to provide the power factor correction. The operating point of energy conversion of the electrolyzer (2) is adjusted in a range between a lower power threshold value and an upper power threshold value in order to avoid operating points of the electrolyzer that require less reactive power and/or a damping of current harmonics.

## Description

The invention relates to a method of providing a power factor correction, a computer program, a computer-readable storage medium, a controller and an electrolysis system.

Electrolysis applications require high DC currents often in a range of 7 - 10 kA. Considering this, thyristor-based rectifiers are the state-of-the art technology due to their very high current carrying capability. However, the thyristor-based rectifiers emit harmonics at the point of connection and in order to be grid compliant. These rectifiers generally require filters and reactive power compensation units. Here, either passive filter consisting of a configuration of lumped elements or active filters, for example STATCOMs, can be utilized. One of the main requirements from the grid operators is that an over-compensation (a power factor of cos(phi)>1) is not allowed. Considering this, the filters must be designed to adjust their reactive power compensation in accordance with the thyristor-based rectifier's power. This generally results in increased installed components such as additional filter-stages or a second unit of an active filter. All these additional devices increase the system costs and reduce availability when not installed redundantly which further increases costs.

It is an object of the present invention to provide an improved method of providing a reactive power reduction.

A solution is provided by the subject matter according to the independent claims. Advantageous additional embodiments of the invention are described by the dependent claims, the following description and the Figures.

The invention relates to a method of providing a power factor correction, particularly a reactive power reduction, for an electrical power converter by means of an electrolyzer, wherein the electrolyzer receives an electrical power from an electrical power source via the electrical power converter and provides a conversion of the electrical power into an energy carrier.

According to the invention, an operating point of the conversion of the electrolyzer is adjusted. The operating point or power level may be an active power conversion level of the electrolyzer into the energy carrier. In other words, an operation level or a power level of an active power conversion of the electrolyzer into the energy carrier is adjusted or shifted to a higher operation or power level that requires a reduced amount of reactive power. For instance, the electrical power converter may comprise a rectifier to provide a conversion of electrical power, particularly a conversion of an alternating current into a direct current, for the electrolyzer, wherein the rectifier may comprise diodes, thyristors or other self-switching elements and configurations. In order to provide the power factor correction for the electrical power converter, the operating point of the electrolyzer may be set to a power level of at least 20 or at least 40 percent of a full or maximum active power conversion level of the electrolyzer.

This provides the technical effect that operating points of the electrolyzer that require an increased amount of reactive power are avoided. Moreover, adjusting or shifting up the operating point of the electrolyzer leads to a higher current load which reduces a waveform distortion due to current harmonics from the electrical power converter and/or the electrolyzer. Thus, a network distortion is reduced. Hence, redundant filter components, particularly redundant passive filter components and/or redundant active filter components, may be avoided due to forcing the electrolyzer to operate at said operating points, particularly at an active power conversion level of the electrolyzer that reduces the amount of reactive power and/or said distortions by current harmonics. Therefore, the number of components of the electrical power converter, particularly a number of filter elements, may be reduced which provides a cost reduction.

In one embodiment, the operating point of the conversion is adjusted to a power level of the electrolyzer that is above a lower power threshold value and/or below an upper power threshold value. In other words, the operating point of the electrolyzer is shifted or set to a power level of at least the lower power threshold value and/or less than the upper power threshold value, particularly by means of a controller for the electrolyzer and/or the electrical power converter.

Additionally or alternatively, a firing angle of a thyristor-based rectifier may be shifted below a threshold firing angle, particularly by means of the controller.

The lower power threshold value and/or the threshold firing angle may be determined by the reactive power compensation threshold of the rectifier and/or of the electrolyzer.

This provides the advantage that less active and/or passive power filter elements or components are needed for a grid compliant operation of the electrolyzer by forcing the electrolyzer to convert the electrical power at a low-power operating point below the lower power threshold value and/or below the threshold firing angle which is problematic as to network stability requirements. Thereby, costs are reduced.

In one embodiment, the lower power threshold value and/or the upper power threshold value is determined by a distortion factor of a current harmonic that is below a distortion factor threshold value. In other words, the lower power threshold value and/or the upper power threshold value and/or the threshold firing angle of the thyristor-based rectifier is determined by a distortion of a current harmonic relative to a load current of the electrolyzer. The distortion factor may be a current total harmonic distortion factor (THDi)or a relative distortion of at least one 2k+1 order harmonic relative to the load current of the electrolyzer. For instance, the distortion factor may be below 5 percent, preferably 2 percent. This provides the advantage, that waveform distortions due to current harmonics from the electrical power converter and/or the electrolyzer are reduced by setting the operating point in a range between the lower power threshold value and the upper power threshold value.

In one embodiment, the distortion factor for the lower power threshold value is determined by a current harmonic of at least a 5^{th} and/or 7^{th} and/or 11^{th} and/or 13^{th} order being below a first distortion factor threshold value. In other words, the distortion factor for the lower power threshold value may be determined by a 2k+1 order harmonic that decreases proportionally with the operating point or power level of the electrolyzer. This provides the advantage that the electrolyzer is forced to operate only at an operating point where waveform distortions are reduced.

In one embodiment, the distortion factor for the upper power threshold value is determined by a current harmonic of at least a 23^{rd} and/or 25^{th} order being below a second distortion factor threshold value. In other words, the distortion factor for the upper threshold value may be determined by a 2k+1 order harmonic that increases proportionally with the operating point or power level of the electrolyzer. This provides the advantage that the electrolyzer is forced to operate only at an operating interval, particularly between the lower power threshold value and the upper power threshold value, where waveform distortions are reduced.

In one embodiment, if a component failure is detected, the operating point of the electrolyzer is adjusted to the power level above the lower power threshold value, particularly above a failure power threshold value that is superior than the lower power threshold value. In other words, the component failure may be detected by detecting an interruption of a control signal between a controller and the respective component and/or by an error message of said component and/or by a current/voltage deviation beyond a current/voltage threshold value. The operating point of the electrolyzer may be shifted or set to a range of power levels of active power conversion of the electrolyzer between the lower power threshold value and the upper power threshold value, particularly corresponding to a reactive power compensation level of the respective failed component. This provides the advantage that a component failure, particularly a filter component failure, may be compensated by adjusting the operating point of the electrolyzer.

In one embodiment, a switching state of a tap changer for a transformer connecting the electrical power converter to the electrical power source is set to adjust the operating point of the electrolyzer. In other words, a turn ratio of the transformer is set by means of the tap changer to adjust a load current of the electrolyzer and/or the converter. This provides the advantage that a further power factor correction is provided.

The invention further relates to a computer-program comprising instructions which, when the program is executed by a computer, particularly by an electrolysis system controller and/or an electrical power converter controller, cause the computer to carry out the steps of said method. The computer may comprise means to execute said method, particularly means to control an operating point of an electrolyzer and/or a conversion level of an electrical power converter, preferably of a rectifier, and/or a switching state of a tap changer.

The invention also relates to a computer readable storage medium having stored thereon said computer program. In other words, the computer readable storage medium may be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer readable storage medium may be a RAM or a ROM, wherein particularly a flash memory is used. The computer readable storage medium may also be a data communication network which allows downloading a program code, such as the Internet for example, or further systems.

The invention further relates to a controller, particularly to an electrolysis system controller and/or an electrical power converter controller comprising said computer-readable storage medium. The controller may be programmable logic controller (PLC). The controller may comprise at least one processor and said computer readable storage medium, wherein the computer readable storage medium comprises said computer program which, when executed by the at least one processor, cause the controller to perform the method as described above. In other words, the at least one processor may be a microprocessor and/or a microcontroller and/or a FPGA (Field Programmable Gate Array and/or a DSP (Digital Signal Processor). The controller may further comprise means to execute said method as described above, particularly means to control an operating point of the electrolyzer and/or a conversion level of an electrical power converter, preferably of a rectifier. Additionally, the controller may comprise means to set or control a switching state of a tap changer.

The invention also relates to an electrolysis system and/or an electrical power converter, particularly to a power to hydrogen converter, comprising said controller. The electrolysis system may further comprise at least one electrolyzer and optionally the electrical power converter.

The invention also relates to realizations comprising a combination of the features of several of the described embodiments.

The present disclosure will be more readily appreciated by reference to the following detailed description when being considered in connection with the accompanying drawings in which:

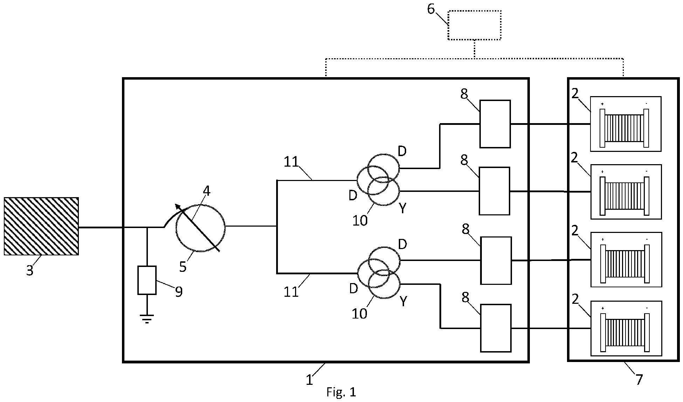

- Figure 1: shows a schematic view of an electrolysis system comprising standard electrolyzers which is connected to an electrical power source via an electrical energy converter.

In the following, the invention will be explained in more detail with reference to the accompanying figure. In the Figure, like elements are denoted by identical reference numerals and repeated description thereof may be omitted in order to avoid redundancies.

Figure 1 shows a schematic view of an electrolysis system 7 comprising at least one electrolyzer 2 that is electrically connected to an electrical power source 3 via the electrical power converter 1. The electrolyzer 2 is adapted to convert electrical power, particularly provided by means of a direct current from the rectifier 8, into an energy carrier such as hydrogen. For this, the electrolyzer 2 may be a proton exchange membrane (PEM) electrolyzer. The electrolysis system 7 may comprise a plurality of electrolyzers 2 that are electrically connected in series and/or in parallel to produce the energy carrier.

The electrical power source 3 may be an alternating current source. For instance, the electrical power source 3 may be an electrical grid in a grid configuration or a renewable electrical power source in an island configuration.

The electrical power converter 1 is configured to transform the electrical power provided by the electrical energy source 3 into an electrical power input for the electrolysis system 7, particularly for the respective electrolyzer 2. Here, the electrical power converter 1 is adapted to convert an alternating current from the electrical power source 3 into a direct current for the electrolysis system 7 by means of the rectifier 8. The rectifier 8 may be diode or thyristor or transistor based. For instance, the rectifier 8 may be a multi-pulse thyristor rectifier, such as a 6-pulse or 12-pulse or 24-pulse rectifier. In Fig. 1, the electrical power converter 1 comprises four 6-pulse thyristor bridge rectifiers 8 that are electrically connected to the electrical power source 3 via the first transformer 5 and the second transformers 10 to provide an input alternating current for the respective rectifier 8.

For instance, the first transformer 5 may provide a first downscaled alternating current from the electrical power source 3 and may furthermore comprise a tap changer 4. The tap changer 4 may be arranged on a power side and/or a load side of the transformer 5.

Additionally or alternatively, the second transformer 10 may respectively comprise the tap changer 4, particularly on a power side and/or a load side.

The electrical power converter 1 may comprise two or more second transformers 10 that are in each branch 11 electrically connected to two 6-pulse thyristor rectifiers 8. The respective second transformer 10 may be a three-winded transformer in a DYD configuration to provide a phase shift of plus/minus 7.5°in each branch 11 for reducing current harmonics.

To adjust the electrical power being fed to the respective electrolyzer 2, a firing angle of the thyristor-based rectifiers 8 may be adjusted which leads to a power factor change and to more current harmonic distortions. For this, the electrical power converter 1 comprises a filter element 9 to provide a power factor correction and/or a damping of the current harmonic distortions. The filter element 9 may be an active or passive filter. The passive filter may comprise lumped elements, whereas the active filter may be a STATCOM, for instance. In order to be grid compliant, the filter element 9 must be designed to adjust the power factor correction and/or the damping of the respective current harmonic distortion in accordance with an electrical power conversion level of the rectifier 6 which results in increased installed components such as additional filters, filter stages, redundant filter elements 9 and/or an active filter that provides more reactive power than necessary. All those additional components increase system costs and reduce availability when not installed redundantly. Those redundancies of the filter element 9 can be minimized by adjusting the operating point of electrical power conversion of the electrolysis system 7, particularly of the respective electrolyzer 2. The operating point of the electrolyzer 2 may be a power level or a conversion rate of electrical power into the energy carrier.

To provide a power factor correction, the operating point of the electrolysis system 7, particularly of the respective electrolyzer 2 is adjusted to a high power or high load operation of the electrolyzer 2. High power or high load operation means a power level of the electrolyzer 2 above a lower power threshold value wherein a firing angle of the thyristors of the rectifier 8 is reduced such that less reactive power is required. The lower power threshold value is further determined by a distortion factor of a current harmonic that is below a distortion factor threshold value. For instance, the distortion factor is a current total harmonic distortion factor (THDi) that is below a threshold value wherein the threshold value may be 2 to 5 percent, for instance.

Additionally or alternatively, the distortion factor for the lower power threshold value is determined by a current harmonic of at least a 5^{th} and/or 7^{th} and/or 11^{th} and/or 13^{th} order being below a first distortion factor threshold value. Here, the first distortion factor may be 2 to 5 percent. Thus, by increasing the operating point of the electrolyzer 2, the relative distortion to the load current of the electrolyzer 2 by a current harmonic from the electrical power converter 1 and/or from the electrolyzer 2 is reduced. However, some current harmonics may increase proportionally with the operating point of the electrolyzer 2. Thus, the distortion factor for the upper power threshold value is also determined by a current harmonic, particularly by a current harmonic of at least a 23^{rd} and/or 25^{th} order being below a second distortion factor threshold value.

For instance, the operating point, i.e. the conversion level of the electrolyzer 2 of converting electrical power into the energy carrier is adjusted to an operating point between the lower and upper power threshold value. For instance, the range may be 20-80 percent, particularly 40-60 percent, of a maximum power level of the electrolyzer 2.

Additionally or alternatively, the operating point of the electrolyzer 2 is adjusted to the power level above the lower power threshold value, particularly above a failure power threshold value that is superior than the lower power threshold value if a component failure of the electrical power converter 1, particularly of a component of the filter element 9 such as a failure of a filter or filter stage of the filter element 9, is detected. For this, the controller 6 may be adapted to detect a component failure of the electrical power converter 1, particularly of the filter element 9. For instance, the controller 6 is adapted to exchange a control signal between the respective component or measure a current deviation to detect the component failure.

In case a filter stage of the filter element 9 fails, the remaining filter stages of the filter element 9 may still provide filtering and reactive power compensation. For instance, the filter element 9 may still operate at 2/3rd capacity if three filter stages are installed and one filter stage fails. Even if the whole filter element 9 unit cannot operate, the rectifier 8 may still be able to operate grid compliant in case it operates at high power, i.e. the operating point of the electrolyzer 2 is above the lower power threshold value. The reason is that the limiting total harmonic distortion (THD) of the current (THDi) is a ratio of the load current and the distortion current. The variations in the absolute distortion of the alternating current are negligible. Thus, by increasing the load current, the THDi is reduced and may be below 2% which is grid compliant and hence acceptable in many applications.

In case an active filter such as a STATCOM of the filter element 9 fails, the problem of over-compensation in certain operating points of the electrolyzer 2 can be avoided by forbidding these operating points until the STATCOM is repaired. The most critical operating points for a thyristor-based rectifier 8 are those with low power, i.e. below the lower power threshold value.

Additionally or alternatively, a switching state of a tap changer 4 for a transformer 5 or 10 connecting the electrical power converter 1 to the electrical power source 3 is set to adjust the operating point of the electrolyzer 2. The tap changer 4 may be adapted to change a turn ratio of the first transformer 5 and/or the second transformer 10. This may change a load current of the electrolysis system 7, particularly of the respective electrolyzer 2, which provides a further supporting correction of the power factor and/or damping of a current harmonic. For instance, the tap changer 4 is set to a switching state to provide an additional power factor correction and/or a relative reduction of a current harmonic distortion.

For this, the controller 6 may be adapted to adjust the operating point of the electrolysis system 7, particularly of the respective electrolyzer 2, and/or an operating point of the electrical power converter 1, particularly of the respective rectifier 8. Additionally, the controller 6 may be adapted to control a switching state of the tap changer 4 for adjusting a turn ratio the first transformer 5 and/or the second transformer 10.

The tap changer 4 of the first transformer 5 and/or second transformer 10 may be designed such that a grid compliant power factor can be provided by shifting the operating point of the electrolyzer 2 and/or by shifting the operating point of the rectifier 8 and/or by adjusting the switching state of the tap changer 4 to the high power operation of the electrolyzer 2, i.e. to an operating point above the lower power threshold value. As a result, the electrolysis system 7 may operate at a relatively high power but cannot operate at a relatively low power for a while, wherein less reactive power and/or damping of current harmonics is required. As a result, adjusting the operating point of the electrolyzer 2 and the switching state of the tap changer 4 allows an operator to continue operation of the electrolyzer 2 in many cases even with faulty equipment at high load. For many applications this might be acceptable in order to reduce costs.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. Method of providing a power factor correction, particularly a reactive power reduction, for an electrical power converter (1) by means of an electrolyzer (2), wherein the electrolyzer (2) receives electrical power from an electrical power source (3) via the electrical power converter (1) and provides a conversion of the electrical power into an energy carrier,
**characterized in that**
an operating point of the conversion of the electrolyzer (2) is adjusted.

2. Method according to claim 1, **characterized in that** the operating point of the conversion is adjusted to a power level of the electrolyzer (2) that is above a lower power threshold value and/or below an upper power threshold value.

3. Method according to claim 2, **characterized in that** the lower power threshold value and/or the upper power threshold value is determined by a distortion factor of a current harmonic that is below a distortion factor threshold value.

4. Method according to claim 2 or 3, **characterized in that** the distortion factor for the lower power threshold value is determined by a current harmonic of at least a 5^{th} and/or 7^{th} and/or 11^{th} and/or 13^{th} order being below a first distortion factor threshold value.

5. Method according to one of the claims 2 to 4, **characterized in that** the distortion factor for the upper power threshold value is determined by a current harmonic of at least a 23^{rd} and/or 25^{th} order being below a second distortion factor threshold value.

6. Method according to one of the preceding claims, **characterized in that** if a component failure is detected, the operating point of the electrolyzer (2) is adjusted to the power level above the lower power threshold value, particularly above a failure power threshold value that is superior than the lower power threshold value.

7. Method according to one of the preceding claims, **characterized in that** a switching state of a tap changer (4) for a transformer (5, 10) connecting the electrical power converter (1) to the electrical power source (3) is set to adjust the operating point of the electrolyzer (2).

8. Computer program comprising instructions which, when the program is executed by a controller (6), particularly by an electrolysis system controller and/or an electrical power converter controller, cause the controller (6) to carry out the steps of the method of claims 1 to 7.

9. Computer-readable storage medium having stored thereon the computer program of claim 8.

10. Controller (6), particularly an electrolysis system controller and/or an electrical power converter controller, comprising a computer-readable storage medium having stored thereon the computer program of claim 8 and optionally means to execute the method of claims 1 to 7.

11. Electrolysis system (7) and/or an electrical power converter (1), particularly a power to hydrogen converter, comprising the controller (6) of claim 10.
